# EUROPÄISCHE PATENTSCHRIFT

(11) **EP 3 377 207 B1**
(45) Veröffentlichungstag und Bekanntmachung des Hinweises auf die Patenterteilung: **26.06.2019**
(21) Anmeldenummer: 15798399.0
(22) Anmeldetag: 19.11.2015
(51) Int. Cl.: B01F 5/06, C02F 1/34

(54) **VORRICHTUNG ZUR VERWIRBELUNG VON LEITUNGSWASSER SOWIE VERWIRBELUNGSELEMENTE HIERFÜR**
DEVICE AND ELEMENTS FOR SWIRLING TAP WATER
APPAREIL ET ÉLÉMENTS POUR TOURBILLONNER L'EAU DU ROBINET

(43) Veröffentlichungstag der Anmeldung: 26.09.2018
(73) Patentinhaber: Prime Inventions GmbH, 33758 Schloss Holte-Stukenbrock (DE)
(72) Erfinder: SUTTNER, Frank, 33758 Schloss Holte-Stukenbrock (DE)
(74) Vertreter: Maiwald Patent- und Rechtsanwaltsgesellschaft mbH
(86) Internationale Anmeldenummer: PCT/EP2015/077097
(87) Internationale Veröffentlichungsnummer: WO 2017/084711

(56) Entgegenhaltungen:
- WO-A1-2015/052702
- CN-U- 203 419 778

## Beschreibung

Die Erfindung betrifft eine Vorrichtung zur Verwirbelung von Leitungswasser, mit einem einen Zulaufanschluss und mindestens einen Ablaufanschluss für Leitungswasser aufweisenden Gehäuse, worin mehrere einen ovalen bis kreisförmigen Grundquerschnitt aufweisende Verwirbelungselemente nach Anspruch 1 untergebracht sind. Die Erfindung betrifft daneben auch die Verwirbelungselemente nach Anspruch 1 selbst sowie die Verwendung derselben zur Leitungswasseraufbereitung.

Das Einsatzgebiet der Erfindung erstreckt sich vornehmlich auf Trinkwasserversorgungssysteme. Mit Vorrichtungen der gattungsgemäßen Art werden wirkungsvoll auch Kalkablagerungen in Wasserleitungen vermieden. Meist werden die hier interessierenden Vorrichtungen auch in Form sogenannter Hauswasserwirbler eingesetzt. Es existieren auch Verwirbelungsvorrichtungen, welche Emulsionen aus Wasser und Öl ermöglichen. Im Trinkwasserbereich dient die Verwirbelung auch dazu, Eisen vom Trinkwasser zu trennen und so zur geschmacklichen Verbesserung beizutragen.

Herkömmliche Vorrichtungen zur Verwirbelung von Wasser bestehen prinzipiell aus einer in einem Gehäuse fest eingebauten Verwirbelungseinheit, beispielsweise in Form eines Flügelrades oder dergleichen. Zusätzlich werden beispielsweise auch Keramik- oder Quarzkugeln integriert. Die herkömmlichen Vorrichtungen müssen LK:
entweder in die Wasserleitung eingebracht oder am Wasserauslass eines Wasserhahns oder Auslaufrohrs angebracht werden.

Aus der DE 20 2005 013 347 U1 geht eine gattungsgemäße Vorrichtung zur Verwirbelung von Leitungswasser hervor, in deren Gehäuse eine einzelne Kugel freibeweglich eingelegt ist, die durch das von einem Zulaufanschluss zu einem Ablaufanschluss hindurchströmende Leitungswasser in Vibration versetzt und die Schwingungsenergie dabei zur Verwirbelung auf das Wasser überträgt. Zur wirkungsvollen Verwirbelung sind jedoch recht hohe Strömungsgeschwindigkeiten erforderlich.

Aus der EP 1 052 226 A1 geht eine andere Vorrichtung zur Verwirbelung von Leitungswasser hervor, in deren Gehäuse eine Mehrzahl von einzelnen Verwirbelungselementen lose untergebracht ist. Diese können beispielsweise aus Edelstahl, Keramik und dergleichen bestehen und sind unterhalb eines ebenfalls im Gehäuse angeordneten Rückschlagventils angeordnet.

Die einzelnen Verwirbelungselemente weisen auch hier eine Kugelform auf. Zusätzlich sorgt ein in Strömungsrichtung nachgeschaltetes Flügelrad für eine weitere Wasserverwirbelung, um den Effekt zu maximieren. Insgesamt ergibt sich ein recht aufwendiger Aufbau.

Die WO 2015/052702 A1 offenbart eine Vorrichtung zur Verwirbelung von Flüssigkeiten und Gasen zwecks Schaumbildung unter Verwendung von kugelförmigen Verwirbelungselementen, deren äußere Oberfläche Vertiefungsstellen unterschiedlicher Gestalt oder flügelförmige Anformungen aufweisen kann.

Es ist die Aufgabe der vorliegenden Erfindung, eine Vorrichtung zur Verwirbelung und Vitalisierung von Leitungswasser zu schaffen, welche unter Einsatz technisch einfacher Mittel eine hohe Wirksamkeit erzielt.

Die Aufgabe wird ausgehend von einem Verwirbelungselement gemäß dem Oberbegriff von Anspruch 1 in Verbindung mit dessen kennzeichnenden Merkmalen gelöst. Im Hinblick auf eine Vorrichtung zur Verwirbelung von Leitungswasser mit mehreren solchen Verwirbungselementen wird auf Anspruch 2 verwiesen. Anspruch 6 gibt die spezielle Verwendung solcher Verwirbelungselemente an. Die abhängigen Ansprüche stellen vorteilhafte Weiterbildungen der erfindungsgemäßen Vorrichtung dar.

Die Erfindung schließt die technische Lehre ein, dass die äußere Oberfläche eines Verwirbelungselements neben mehreren als Vertiefungsstellen ausgebildeten Ausnehmungen außerdem mehrere als Erhöhungsstellen ausgebildete Anformungen aufweist, wobei die Ausnehmungen und Anformungen eine im Querschnitt symmetrische Form aufweisen, und wobei die symmetrischen Ausnehmungen und Anformungen kegelförmig ausgebildet sind.

Der Vorteil derartiger selbstständig nutzbarer Verwirbelungselemente liegt insbesondere darin, dass diese sich in einfacher Weise, beispielsweise als Granulat, herstellen lassen und auch zur Beimengung für andere Wasseraufbereitungsgranulate verwendet werden können, um eine gleichmäßige Nutzung und ein höhere Hygiene im genutzten Gehäuse zu gewährleisten. Die mit den erfindungsgemäßen Verwirbelungselementen erzielte gleichmäßig verteilte Verwirbelung des Wassers beugt insbesondere einer Biofilmbildung vor, so dass in Folge der ständigen starken Verwirbelung auch keine Grundlage für eine Bakterienansiedlung entstehen kann. Gleichzeitig wird durch eine gleichmäßige Verwirbelung direkt vor Ort zwischen den Verwirbelungskörpem eine hohe Wirksamkeit erzielt. Werden die erfindungsgegenständlichen Verwirbelungselemente zusammen mit einem Aufmineralisierungsgranulat verwendet, ist eine besonders gleichmäßige und schnelle Aufnahme im Wasser gewährleistet. Durch spezielle Formgebungen der Vertiefungsstellen und Erhöhungsstellen auf der äußeren Oberfläche des Verwirbelungselements kann die Durchflussgeschwindigkeit beeinflusst werden. So erhöhen runde gleichmäßig auf der äußeren Oberfläche des Verwirbelungselements verteilte Ausnehmungen als Vertiefungsstellen den Wasserdurchfluss mit allen bekannten Vorteilen.

Die erfindungsgemäß als Vertiefungsstellen oder Erhöhungsstellen dienenden Ausnehmungen bzw. Anformungen weisen eine im Querschnitt symmetrische Form auf. Diese sind kegelförmig ausgebildet.

Gemäß einer weiteren die Erfindung verbessernden Maßnahme wird vorgeschlagen, dass die geometrischen Abmessungen der Ausnehmungen bzw. Anformungen auf der äußeren Oberfläche des Verwirbelungselements derart klein bemessen sind, dass diese Nanoverwirbelungen und/oder Mikroverwirbelungen in der Leitungswasserströmung erzeugen. Eine Nanoverwirbelung ist eine Verwirbelung des Wassers, die durch die Ausnehmungen und/oder Anformungen im Größenbereich von 1 bis 1000 Nanometern ausgelöst wird. Analog hierzu ist eine Mikroverwirbelung eine Verwirbelung des Wassers, die durch die Ausnehmungen und/oder Anformungen im Größenbereich von 1 bis 1000 Mikrometern ausgelöst wird.

Einzeln oder in kleinerer Stückzahl und größerer Form ist das erfindungsgegenständliche Verwirbelungselement vorzugsweise direkt innen im Strahlregler eines Wasserhahns als Gehäuse angeordnet. Es ist jedoch auch denkbar, Verwirbelungselemente direkt in einer Wasserleitung einzusetzen. Der Vorteil bei der letztgenannten Variante ist, dass ein separates Gehäuse zur Unterbringung der Verwirbelungselemente nicht erforderlich ist. Insbesondere für diesen Anwendungsfall wird vorgeschlagen, die mehreren innerhalb eines Wasserleitungsabschnitts lose angeordneten Verwirbelungselemente über Verbindungsstege miteinander zu koppeln. Die Verbindungsstege bilden dabei eine mechanisch flexible Verbindung zwischen den einzelnen angekoppelten Verwirbelungselementen, um deren Bewegbarkeit nicht zu behindern.

Daneben ist es auch denkbar, die im Gehäuse lose untergebrachten Verwirbelungselemente magnetisch miteinander zu koppeln. Hierfür können die Verwirbelungselemente selbst aus einem ferromagnetischen Material gefertigt sein. Durch die Verbindungsstege oder Verbindungselemente zwischen den Verwirbelungselementen kann eine Verwirbelungskette erzeugt werden, die in einem Wasserleitungsabschnitt oder einem Wasserschlauch befestigt wird. Durch die verteilte Verwirbelung wird um die Verwirbelungskette herum eine Biofilmbildung vermindert oder gänzlich vermieden. Das hierdurch unterdrückte Bakterienwachstum im Wasserleitungsabschnitt bekämpft beispielsweise eine Legionellenbildung im Trinkwasser. Auch die Ablagerungen von Kalk in einem Wasserleitungsabschnitt mit integrierter Verwirbelungskette wird stark reduziert. In diesem Zusammenhang ist es möglich, kleinere Abschnitte einer Verwirbelungskette nur dort zu platzieren, wo sich in Wasserleitungsabschnitten aufgrund der Leitungsführung oder der Umgebungstemperaturen Kalk und Biofilm hauptsächlich ansetzen. Eine magnetische Aneinanderkopplung von Verwirbelungselementen lässt sich vorzugsweise im Bereich von Rohrabbiegungen einsetzen und schützt diese Leitungsabschnitte vor Verkalkung und Ablagerungen.

Der Rohrdurchmesser des Wasserleitungsabschnitts ist - genauso wie ein Gehäuse im Bereich eines Wasserhahns - mit einem Querschnitt zu dimensionieren, welcher auf den Grundquerschnitt der hierin untergebrachten Verwirbelungselemente derart abgestimmt ist, dass bei Durchströmung von Leitungswasser der gewünschte Verwirbelungseffekt einsetzt, ohne den Durchfluss zu stark zu beeinträchtigen.

Wird ein Verwirbelungselement aus einem Material gefertigt, welches auch als Vitalisierungsmedium verwendet wird, kann auf eine zusätzliche diesbezügliche Baueinheit verzichtet werden. Außerdem ist durch das erfindungsgemäße Verwirbelungselement dank der vergrößerten äußeren Oberfläche eine höhere Wirkfläche des Vitalisierungsmediums mit dem Wasser gegeben.

Weitere die Erfindung verbessernde Maßnahmen werden nachstehend gemeinsam mit der Beschreibung bevorzugter Ausführungsbeispiele der Erfindung anhand der Figuren näher dargestellt. Es zeigt:
- Figur 1: einen schematischen Längsquerschnitt einer Vorrichtung zur Verwirbelung von Leitungswasser in einer ersten Ausführungsform,
- Figur 2: einen schematischen Querschnitt einer Vorrichtung zur Verwirbelung von Leitungswasser in einer zweiten Ausführungsform,
- Figur 3: einen schematischen Querschnitt einer Vorrichtung zur Verwirbelung von Leitungswasser in einer dritten Ausführungsform.

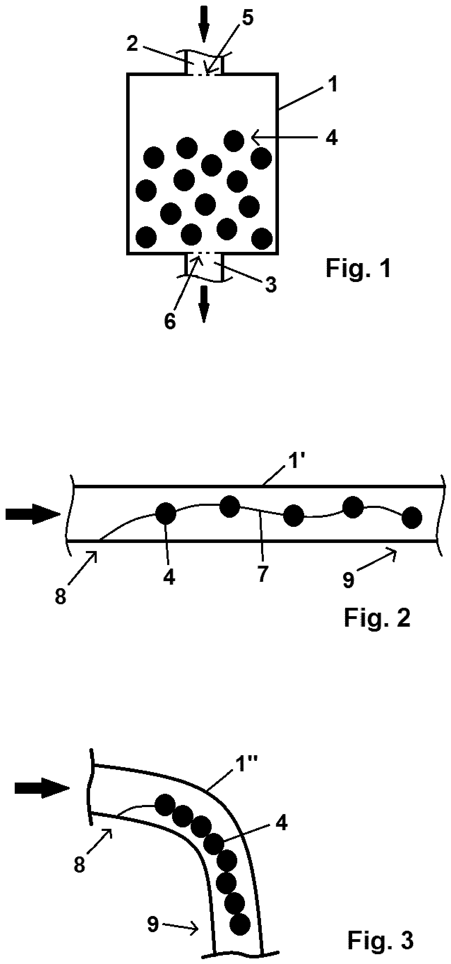

Gemäß Figur 1 besteht eine Vorrichtung zur Verwirbelung von Leitungswasser im Wesentlichen aus einem zylindrischen Gehäuse 1 mit einem Zulaufanschluss 2 und einem unteren Ablaufanschluss 3 für Leitungswasser. Die Fließrichtung des Leitungswassers durch das Gehäuse 1 ist durch Pfeile zeichnerisch dargestellt. Innerhalb des Gehäuses 1 sind mehrere in einem kreisförmigen Grundquerschnitt aufweisende Verwirbelungselemente 3 lose untergebracht. Um zu verhindern, dass die Verwirbelungselemente 3 aus dem Gehäuse 1 austreten, ist seitens des Zulaufanschlusses 2 und seitens des Ablaufanschlusses 3 je ein Sieb 5 bzw. 6 angeordnet. Strömt das Leitungswasser vom Zulaufanschluss 2 an den Verwirbelungselementen 4 vorbei zum Ablaufanschluss 3, so erzeugen die Verwirbelungselemente 4 heftige chaotische Verwirbelungen in der Leitungswasserströmung.

Nach Figur 2 ist das Gehäuse 1' als ein Wasserleitungsabschnitt eines - nicht weiter dargestellten - Trinkwasserversorgungssystem ausgebildet. Hierin sind mehrere über Verbindungselemente 7 aneinander gekoppelte Verwirbelungselemente 4 lose untergebracht. Die Verbindungselemente 7 sind nach Art eines flexiblen Fadens ausgebildet, um die Bewegbarkeit der derart aneinandergeketteten Verwirbelungselemente 4 innerhalb des rohrförmigen Gehäuses 1' zu ermöglichen. Während das in durch den Pfeil markierten Strömungsrichtung liegende vordere Ende 8 der aneinandergeketteten Verwirbelungsselemente 4 an der Innenwandung des rohrförmigen Gehäuses 1' angebracht ist, kann sich das gegenüberliegende hintere Ende der aneinandergeketteten Verwirbelungselemente 4 frei im rohrförmigen Gehäuse 1' bewegen, um insbesondere auch Ablagerungen an der Innenwandung des rohrförmigen Gehäuses 1' zu vermeiden.

Bei dem in der Figur 3 illustrierten Ausführungsbeispiel ist das rohrförmige Gehäuse 1" als Rohrbiegung ausgeführt und die lose hieran hierin untergebrachten Verbindungselemente 4 sind magnetisch miteinander gekoppelt. Daher bestehen die einzelnen Verbindungselemente 4 hier aus einem magnetischen Material. Als Verliersicherung sind die Verbindungselemente 4 zusätzlich mit einem - nicht erkennbaren - Haltefaden miteinander verbunden und seitens des vorderen Endes 8 an der Innenwandung des rohrförmig gebogenen Gehäuses 1" angebracht. Dem gegenüber kann sich das gegenüberliegende Ende 9 der aneinandergekoppelten Verwirbelungselemente frei bewegen.

### Bezugszeichenliste

- 1: Gehäuse
- 2: Zulaufanschluss
- 3: Ablaufanschluss
- 4: Verwirbelungselement
- 5: Sieb, zulaufseitig
- 6: Sieb, ablaufseitig
- 7: Verbindungselement
- 8: vorderes Ende
- 9: hinteres Ende

## Patentansprüche

1. Verwirbelungselement zur losen Unterbringung in ein mit einem Zulaufanschluss (2) sowie Ablaufanschluss (3) für Leitungswasser versehenden Gehäuse (1; 1' 1"), wobei das Verwirbelungselement (4) einen ovalen bis kreisförmigen Grundquerschnitt aufweist, wobei die äußere Oberfläche mehrere als Vertiefungsstellen ausgebildete Ausnehmungen aufweist,
**dadurch gekennzeichnet, dass** die äußere Oberfläche außerdem mehrere als Erhöhungsstellen ausgebildete Anformungen aufweist, wobei die Ausnehmung und Anformungen eine im Querschnitt symmetrische Form aufweisen, und wobei die symmetrischen Ausnehmungen und Anformungen kegelförmig ausgebildet sind.

2. Vorrichtung zur Verwirbelung von Leitungswasser, mit einem einen Zulaufanschluss (2) und mindestens einen Ablaufanschluss (3) für Leitungswasser aufweisenden Gehäuse (1; 1'; 1"), worin mehrere ein einen ovalen bis kreisförmigen Grundquerschnitt aufweisende Verwirbelungselemente (4;) nach Anspruch 1 untergebracht sind.

3. Vorrichtung nach Anspruch 2,
**dadurch gekennzeichnet, dass** das Gehäuse (1'; 1") als ein Wasserleitungsabschnitt ausgebildet ist.

4. Vorrichtung nach Anspruch 3,
**dadurch gekennzeichnet, dass** mehrere im Gehäuse (1") untergebrachte Verwirbelungselemente (4) magnetisch miteinander gekoppelt sind.

5. Vorrichtung nach Anspruch 3,
**dadurch gekennzeichnet, dass** mehrere im Gehäuse (1') untergebrachte Verwirbelungselemente (4) über Verbindungselemente (7) aneinander gekoppelt sind.

6. Verwendung mehrerer Verwirbelungselemente nach Anspruch 1 zur Verwirbelung von Leitungswasser, insbesondere zur Aufbereitung in einem Trinkwasserversorgungssystem.

## Claims

1. Swirling element for slack accommodation in a housing (1; 1'; 1") provided with an inlet connection (2) and an outlet connection (3) for tap water, wherein the swirling element (4) has an oval to circular base cross-section, wherein the outer surface has a plurality of recesses formed as depressions,
**characterized in that** the outer surface further comprises a plurality of raised portions being formed as protrusions, the recess and protrusions having a symmetrical shape in the cross-section, and the symmetrical recesses and protrusions being conical in shape.

2. Device for swirling tap water, comprising a housing (1; 1'; 1") having an inlet connection (2) and at least one outlet connection (3) for tap water, in which a plurality of swirling elements (4) having an oval to circular base cross-section according to Claim 1 are accommodated.

3. Device according to claim 2,
**characterized in that** the housing (1'; 1") is formed as a water pipe portion.

4. Device according to claim 3,
**characterized in that** a plurality of swirling elements (4) accommodated in the housing (1") are magnetically coupled to one another.

5. Device according to claim 3,
**characterized in that** a plurality of swirling elements (4) accommodated in the housing (1') are coupled to one another via connecting elements (7).

6. Use of a plurality of swirling elements according to claim 1 for swirling tap water, in particular for treatment in a drinking water supply system.

## Revendications

1. Elément de tourbillonnement destiné à être placé de manière lâche dans un boîtier (1 ; 1' ; 1") pourvu d'un orifice d'entrée (2) ainsi que d'un orifice de sortie (3) pour de l'eau du robinet, dans lequel l'élément de tourbillonnement (4) a une section transversale principale ovale à circulaire, dans lequel la surface extérieure comporte plusieurs évidements formés comme des creux,
**caractérisé en ce que** la surface extérieure comporte en outre plusieurs conformations formées comme des élévations, dans lequel les évidements et les conformations ont une forme symétrique en section transversale, et dans lequel les évidements et les conformations symétriques sont conformés de manière conique.

2. Dispositif destiné à faire tourbillonner de l'eau du robinet, ayant un boîtier (1 ; 1' ; 1") comportant un orifice d'entrée (2) et au moins un orifice de sortie (3) pour l'eau du robinet, dans lequel sont placés plusieurs éléments de tourbillonnement (4) ayant une section transversale principale ovale à circulaire selon la revendication 1.

3. Dispositif selon la revendication 2, **caractérisé en ce que** le boîtier (1' ; 1") est configuré comme un tronçon de conduite d'eau.

4. Dispositif selon la revendication 3, **caractérisé en ce que** plusieurs éléments de tourbillonnement (4) placés dans le boîtier (1") sont couplés magnétiquement les uns aux autres.

5. Dispositif selon la revendication 3, **caractérisé en ce que** plusieurs éléments de tourbillonnement (4) placés dans le boîtier (1') sont couplés les uns aux autres par l'intermédiaire d'éléments de jonction (7).

6. Utilisation de plusieurs éléments de tourbillonnement selon la revendication 1 pour faire tourbillonner l'eau du robinet, en particulier pour le traitement dans un système d'alimentation en eau potable.
